# EUROPEAN PATENT APPLICATION

(11) **EP 0 948 109 A2**
(43) Date of publication of application: **06.10.1999**
(21) Application number: 99201042.1
(22) Date of filing: 01.04.1999
(51) Int. Cl.: H02G 3/18, H02G 3/28

(54) **Connection system for computer networks**

(30) Priority: 01.04.1998 NL 1008783
(71) Applicant: T.H.S. Technische Handelsonderneming St. Pancras B.V., 1811 MZ Alkmaar (NL)
(72) Inventor: Staa, Michel Jacobus Gerardus Maria, 1811 MZ Alkmaar (NL)
(74) Representative: de Bruijn, Leendert C.

(57) **Abstract**

A system box for making connections in a network such as a computer network, comprises a baseplate with at least one fixed wall, two connected walls which can be detachably coupled to the bottom plate and together form an angle, and also a cover plate which can be coupled to the walls, at least one of the two connected walls bearing connectors, plug-in modules or chassis parts, in such a way that a connector, plug-in module or chassis part in each case is connected to a cable which is guided outside through an aperture in the other wall.

## Description

The invention relates to the provision of a system by means of which connections can be made in a well-organized reliable manner for the benefit of networks. In the case of such networks, which may include may computers, in particular PCs, the connections often constitute a problem because of the many cables, plugs and sockets, which must all be well protected and preferably placed out of sight.

It is known to accommodate the cabling of such a network in the space between a floor and a false floor supported upon it at a slightly higher level. Such a intermediate space is generally of very limited height, since it has to be obtained at the expense of the height available above the floor. The cables are placed in such a space, which particularly in the case of fairly large numbers of connections soon leads to a confusing tangle.

The object of the invention is first of all to offer a solution to this problem, in such a way that a neat arrangement of network cables is also ensured under a false floor. That object is achieved by using a system box for making connections in a network, such as a computer network, comprising a baseplate with at least one fixed wall, two connected walls which can be detachably coupled to the bottom plate and together form an angle, and also a cover plate which can be coupled to the walls, at least one of the two connected walls bearing connectors, plug-in modules or chassis parts, in such a way that a connector in each case is connected to a cable which is guided outside through a aperture in the other wall.

In the case of the invention a number of cables can be connected to a centrally placed system box. In addition, computers placed in the vicinity of the system box can be connected in a well-organized manner.

The system box according to the invention has various advantages. First of all, the cables can be combined in a simple manner with the two interconnected walls. Each cable is first of all inserted into a hole in one wall and is then attached to the appropriate connector in the other wall. Because the two walls are situated at a fixed distance from each other, the connection once made is well protected against any external loads such as tensile forces which may occur.

As soon as the cables have been installed, the walls can be combined with the baseplate and the other wall(s), after which the cover plate can be fitted. This procedure is simple to carry out, even through a temporary access made for this purpose in the false floor.

The system box according to the invention can be produced in many different kinds of variants. For example, the baseplate can have two fixed walls which form a angle.

The baseplate can also be extended at the side of a fixed wall facing away from the loose walls, which extended baseplate part is enclosed by four fixed walls. The extended baseplate part bears supply connections. Said supply connections can be designed for supplying the computers of the network.

The baseplate can also bear two centrally positioned, parallel fixed walls, in which at the sides facing away from each other baseplate parts extend, each of said baseplate parts bearing two connected walls which together form an angle and can be detachably coupled to the respective baseplate parts. In this case supply connections can be situated between the two fixed walls.

The invention also relates to a connection system for providing connections, under a false floor, in a network, such as a computer network, comprising a system box with a baseplate, which system box can be set up under the false floor and has at least one fixed wall, two connected walls which can be detachably coupled to the bottom plate and together form an angle, and also a cover plate which can be coupled to the walls, at least one of the two connected walls bearing connectors, in such a way that a connector in each case is connected to a cable which is guided outside through a aperture in the other wall, and also a bushing comprising a holder which can be placed in a recess in the floor, and an insert which can be placed in the holder and has a bushing aperture over which a brush hair closure extends.

The insert of the bushing comprises two walls which form an angle and the transverse measurement of which is identical in a plane perpendicular to the two walls, one of the walls being completely closed, and the other wall defining the bushing aperture with brush hair closure, while at one side of the recess the holder has a guide in which in each case one of the walls of the insert can be accommodated in such a way that the other wall of the insert extends over the recess.

As desired, the insert can be placed in such a way that the bushing is closed or is accessible by means of the brush hair closure. In the former case the wall with the bushing is inserted into the guide, while in the latter case it is the closed wall which is inserted.

The invention will be explained in greater detail below with reference to a number of exemplary embodiments shown in the figures.
Figure 1 shows a disassembled view in perspective of the baseplate with walls, according to a first embodiment.
Figure 2 shows a second embodiment.
Figure 3 shows a third embodiment.
Figure 4 shows the embodiment of Figure 1 in the assembled state closed by means of a cover.
Figures 5 and 6 show details of a bushing, for use in the case of the system box according to the invention.

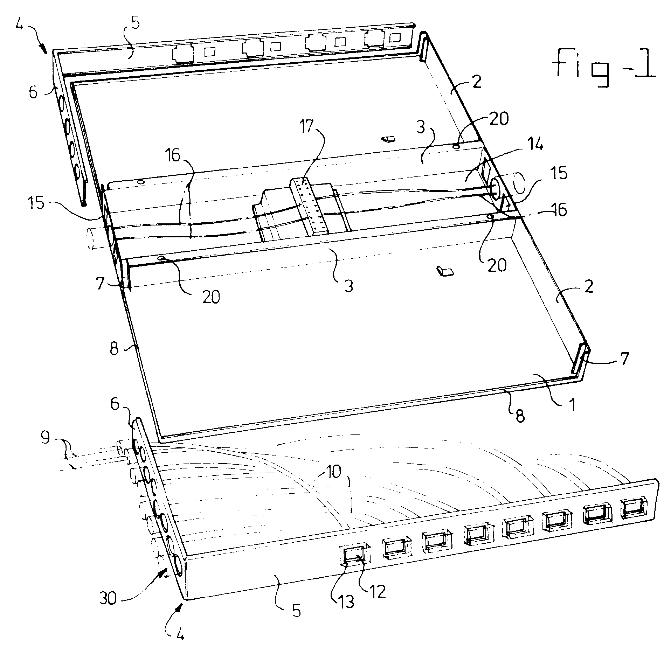

The system box shown in Figure 1 (the cover is not shown) comprises a baseplate 1 with fixed walls 2, 3. There is also a wall part 4, composed of two interconnected walls 5, 6, which form an angle and can be coupled to the bottom plate 1. To that end, bottom plate 1 has vertical ridges 8, inside which the walls 5, 6 can be placed

In addition, the fixed walls 2, 3 have profiled sections 7, in which the ends of the walls 5, 6 can be fixed in a secure manner.

As shown in Figure 1, a number of cables 9 are guided through the swivels 10, which are connected to the apertures 11 in the wall 6. Each cable 9 is then guided with a arc 10 to a corresponding connector 12, which is fixed in corresponding aperture 13 of the wall 5.

The combination of wall piece 4 with the cables 9 can then be fixed as described above on the bottom plate 1, between the ridges 8 and in the profiled sections 7.

In the embodiment of Figure 1 the bottom plate 1 has two parallel walls 3, which bound a space 14 which is further screened off by walls 15. A supply connection can be situated in this space 14, as shown by cables 16 which are connected to a crown block 17.

The second wall piece 4 at the opposite side of the baseplate 1 can be fitted in the same way and provided with cables (not shown).

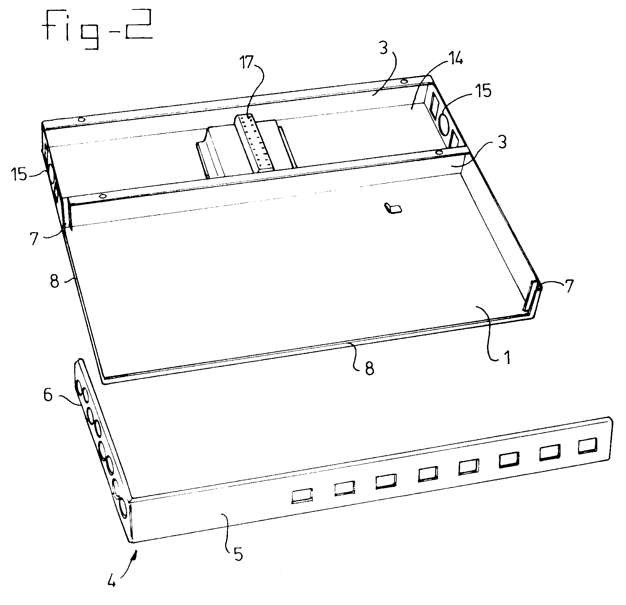

The embodiment of Figure 2 shows a variant in which the baseplate 1 bears one supply part 14, and has one part on which the walls 5, 6 can be placed. The corresponding cables are omitted here.

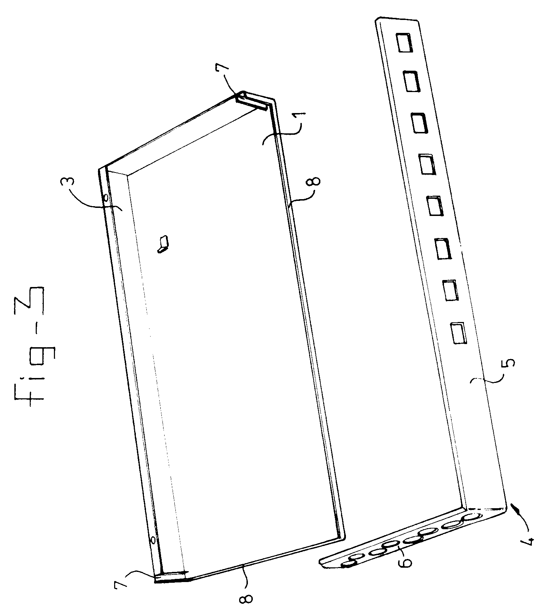

The same applies to the variant of Figure 3, in which the supply part is also omitted.

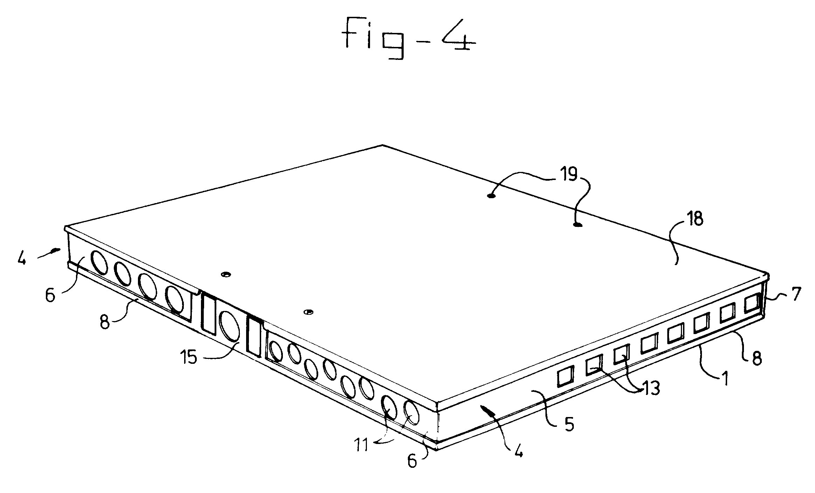

Figure 4 shows the embodiment of Figure 1, in the assembled state and covered with a cover plate 18. Said cover plate 18 is fixed by means of screws in the holes 20, as provided in the walls 3 shown in Figure 1.

For the sake of clarity, the cables are omitted in the view of Figure 4.

As stated, the system box according to the invention can preferably be used under a false floor. The cables coming from the computers therefore have to be guided through the floor surface to the system box in question.

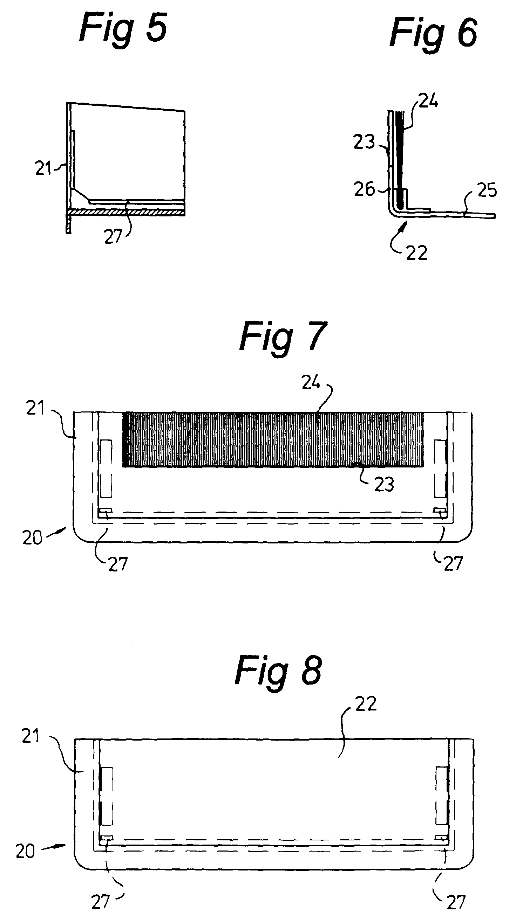

In a connection system according to the invention, in addition to the system box described above, a bushing shown in greater detail in Figures 5-8 is used.

This bushing 20, as shown in Figures 7 and 8, comprises a holder 21 which can be placed in a recess in the floor and has a flange 28 which is U-shaped in plan view and to which a likewise U-shaped housing is connected. See also the cross-section of Figure 5.

The holder 21 also has groove-shaped guides 27 situated opposite each other, in which the insert 22 can be placed.

In the cross-section of Figure 6 it can be seen that this insert 22 has a full wall 25, and also a wall 26 provided with a bushing aperture 23. Below this wall 26 and the bushing aperture 23 extends a brush hair closure 24.

In the situation shown in Figure 7 the wall 25 is pushed with its opposite ends into the guides 27. The wall 26 with the bushing aperture 23 in that case is situated in the plane of the floor, aperture 23 being closed by means of the brush hair closure 24. The cables can be guided upwards from underneath the floor through this brush hair closure 24.

In the situation shown in Figure 8 the wall 26 is inserted into the guides 27, with the result that the bushing is now fully closed.

## Claims

1. System box for making Connections in a network, such as a computer network, Comprising a baseplate (1) with at least one fixed wall (2, 3), two connected walls (5, 6) which can be detachably coupled to the bottom plate (1) and together form an angle, and also a cover plate (18) which can be coupled to the walls (2-6), at least one (5) of the two connected walls bearing connectors, plug-in modules or chassis parts (13), in such a way that a connector, plug-in module or chassis part (13) in each case is connected to a cable (9, 10) which is guided outside through an aperture (11) in the other wall (6).

2. System box according to Claim 1, in which the baseplate (1) has two fixed walls (2, 3) which form an angle.

3. System box according to Claim 1 or 2, in which the baseplate (1) is extended at the side of a fixed wall (3) facing away from the loose walls (5, 6), which extended baseplate part is enclosed by four fixed walls (3, 15), and the cover plate (18) has the same measurements as the baseplate (1).

4. System box according to Claim 3, in which the extended baseplate part bears supply connections (16, 17).

5. System box according to one of the preceding claims, in which the baseplate (1) bears two centrally positioned, parallel fixed walls (3), in which at the sides facing away from each other baseplate parts extend, each of said baseplate parts bearing two connected walls (5, 6) which together form an angle and can be detachably coupled to the respective baseplate parts.

6. System box according to Claims 3, 4 and 5, in which supply connections are situated between the two fixed walls (15).

7. Connection system for providing connections, under a false floor, in a network, such as a computer network, comprising a system box with a baseplate (1), which System box can be set up under the false floor and has at least one fixed wall (2, 3), two connected walls (5, 6) which can be detachably coupled to the bottom plate and together form an angle, and also a cover plate (18) which can be coupled to the walls (2-6), at least one (5) of the two connected walls bearing connectors (12), in such a way that a connector (12) in each case is connected to a cable (9, 10) which is guided outside through an aperture (11) in the other wall (6), and also a bushing (20) comprising a holder (21) which can be placed in a recess in the floor, and an insert (22) which can be placed in the holder (21) and has a bushing aperture (23) over which a brush hair closure (24) extends.

8. Coupling system according to Claim 7, in which the insert (22) of the bushing (20) comprises two walls (25, 26) which form an angle and the transverse measurement of which is identical in a plane perpendicular to the two walls (25, 26), one of the walls (25) being completely closed, and the other wall (26) defining the bushing aperture (23) with brush hair closure (24), while at one side of the recess the holder (21) has a guide (27) in which in each case one of the walls (25, 26) of the insert can be accommodated in such a way that the other wall of the insert extends over the recess.
